# FASCICULE DE BREVET EUROPEEN

(11) **EP 1 319 922 B1**
(45) Date de publication et mention de la délivrance du brevet: **24.01.2007**
(21) Numéro de dépôt: 01811218.5
(22) Date de dépôt: 12.12.2001
(51) Int. Cl.: G01B 5/00, G01B 5/02, G01B 5/06

(54) **Colonne de mesure de dimension longitudinale**
Säule zur Messung von longitudinalen Dimensionen
Column for measuring longitudinal dimensions

(43) Date de publication de la demande: 18.06.2003
(73) Titulaire: TESA SA, 1020 Renens (CH)
(72) Inventeur: Jordil, Pascal, 1612 Ecoteaux (CH); Zanier, Adriano, 1008 Prilly (CH)
(74) Mandataire: P&TS Patents & Technology Surveys SA

(56) Documents cités:
- US-A- 4 149 317
- US-A- 5 373 645
- PATENT ABSTRACTS OF JAPAN vol. 1996, no. 02, 29 février 1996 (1996-02-29) -& JP 07 253301 A (NIKON CORP), 3 octobre 1995 (1995-10-03)

## Description

La présente invention concerne une machine à mesurer, notamment une colonne de mesure de dimension longitudinale, par exemple une colonne de mesure de hauteur.

Des colonnes de mesure de hauteur sont décrites par exemple dans le document US4924598. Elles sont utilisées par exemple pour la mesure ou la comparaison de dimensions, par exemple dans des ateliers de mécanique. Une colonne de mesure comprend généralement un bâti fixe avec un socle, un chariot pouvant se déplacer verticalement le long du bâti, un dispositif d'entraînement du chariot et un système de mesure de la position verticale du chariot. Une touche est liée au chariot et destinée à être mise en contact avec la pièce à mesurer. Certaines colonnes de mesure comportent un socle muni de moyens permettant de créer un coussin d'air afin de déplacer aisément la colonne de mesure de hauteur sur le plan de travail.

La colonne de mesure décrite dans US4924598 comprend un moteur électrique logé dans le socle et entraînant la poulie inférieure au travers d'un axe ou d'une courroie de transmission. La poulie inférieure entraîne une courroie d'entraînement liée au chariot, ainsi qu'un contrepoids se déplaçant en sens opposé au chariot. La courroie d'entraînement est tendue entre les poulies inférieures et supérieures. Le chariot comporte des roulements pour s'appuyer sur des rails de guidage liés au bâti.

Le système de mesure électronique permet de déterminer la position du chariot, et donc de la touche, et de l'afficher sur un affichage électronique. La résolution et la précision que l'on attend de ce type de colonnes de mesure est de l'ordre du micron.

Cette précision dépend pour une part importante de la force de contact entre la touche et la pièce à mesurer. Une force de contact importante entraîne une flexion de la touche et/ou de la pièce, voire une déformation élastique du matériau, pouvant influencer la mesure. La force de contact entre la touche et la pièce à mesurer doit donc être minime ou, en tous les cas, identique à chaque mesure.

Il est donc important d'assurer que la force de traction exercée par le câble ou la courroie sur le chariot soit reproductible quelle que soit la position longitudinale du chariot. Dans ce but, il est nécessaire de prévoir la colonne de manière à ce que l'entraînement de chariot soit aussi doux et régulier que possible. En particulier, il est nécessaire de supprimer autant que possible les chocs et les à-coups.

Comme mentionné plus haut, les colonnes de mesure sont toutefois souvent déplacées sur coussin d'air lors de la mesure. Le chariot est déplacé verticalement à l'aide du moteur. La touche vient en contact avec la pièce à mesurer. L'opérateur manipule le pupitre de commande ou le volant de réglage de hauteur. La colonne de mesure est donc soumise à différents types de chocs et d'accélérations lors d'une séance de mesure normale.

Il a été constaté dans le cadre de ces inventions que ces accélérations entraînent parfois un balancement du contrepoids. En effet, celui-ci est suspendu par le câble ou la courroie d'entraînement et donc libre de se déplacer latéralement. Lorsque le contrepoids se trouve au bas de la colonne, des chocs peuvent provoquer un balancement du contrepoids de relativement grande amplitude et qui ne s'amortit que très lentement. C'est particulièrement le cas avec des colonnes de mesure modernes dans lesquelles la tension du câble/ de la courroie est faible afin de limiter les forces et les moments exercés sur le chariot de mesure. Dans ce cas, la courroie d'entraînement n'exerce qu'une force de rappel limitée sur le contrepoids en balancement.

Ce balancement provoque une traction variable sur la courroie ou le câble d'entraînement, qui se répercute sur le chariot et la touche. La force d'appui de la touche sur la pièce à mesurer est influencée par cette traction, qui perturbe gravement la mesure.

Par ailleurs, des balancements importants du contrepoids peuvent se produire également lors du transport de la colonne de mesure, pouvant éventuellement même endommager la colonne.

Le brevet US4399617 décrit une colonne de mesure dans laquelle le contrepoids est guidé par une tige le traversant par une ouverture longitudinale en son milieu. Le contrepoids ne se déplace pas librement, mais glisse autour de cette tige. On supprime ainsi toutes possibilités de balancement. Le frottement entre le contrepoids et la tige centrale créé toutefois une tension supplémentaire sur les câbles d'entraînement, qui se répercutent sur le chariot de mesure et créent des contraintes supplémentaires. Si la tige n'est pas parfaitement verticale, le frottement dépend en outre de la position verticale du contrepoids, entraînant une force d'appui qui varie selon la position du chariot. La tige et l'ouverture à travers le contrepoids doivent être usinés avec une grande précision pour assurer un frottement constant sur toute la course du contrepoids ; cette exigence entraîne un surcoût important.

Le brevet US5373645 décrit une colonne de mesure dans laquelle le chariot de la touche de palpage et le contrepoids sont solidaires des deux brins d'une courroie tendue entre quatre poulies, dont une des deux poulies inférieures est entraînée par un moteur dans la partie inférieure de la colonne. Le contrepoids se déplace verticalement à l'intérieur du bâti.

La demande de brevet JP07253301 porte sur une machine de mesure de cordonnées à trois axes, dans lequel le mouvement de la touche de palpage selon l'axe vertical est balancé par un contrepoids relié à la touche par une boucle de câble.

Le brevet US 4149317 divulgue un dispositif de mesure comportant une colonne verticale avec un contrepoids capable de se déplacer librement à l'intérieur du bâti de la colonne.

Un but de la présente invention est de proposer une colonne de mesure de dimensions longitudinale qui permette d'éviter les inconvénients des colonnes de l'art antérieur. En particulier, un but de la présente invention est de réaliser une colonne de mesure de dimensions longitudinales dans laquelle les perturbations causées par le contrepoids sont réduites au minimum.

Selon l'invention, ces buts sont atteints au moyen d'une colonne de mesure comprenant les caractéristiques de la revendication 1, des variantes préférentielles étant par ailleurs indiquées dans les revendications dépendantes.

En particulier, ces buts sont atteints à l'aide d'une surface de guidage qui limite l'ébat du contrepoids. Un jeu est prévu entre le contrepoids et la surface de guidage ; ce jeu est suffisant pour éviter tout contact entre le contrepoids et toute surface de guidage lorsque le contrepoids est déplacé verticalement.

Ceci a l'avantage que le balancement du contrepoids peut être fortement réduit, sans toutefois créer de frottement supplémentaire. Les éventuelles oscillations du contrepoids ne peuvent avoir qu'une amplitude très limitées et seront donc amorties très rapidement.

Le choix du jeu entré la surface de guidage et le contrepoids est le résultat d'un compromis. Un jeu trop important est insuffisant pour supprimer les perturbations causées par le balancement du contrepoids. Un jeu très faible impose des tolérances de fabrication étroites pour éviter tout contact entre le contrepoids et la surface de guidage. Si le jeu est insuffisant, même un usinage très précis ne permet pas d'éviter le risque de collision lorsque la colonne de mesure est posée sur une surface pas absolument horizontale.

Des tests et des essais ont montré que le risque de collision entre le contrepoids et les surfaces de guidage augmente rapidement lorsque le jeu est inférieur à 0.2 millimètres. D'autre part, un jeu inférieur à 5 millimètre est généralement suffisant, dans le cas de colonnes de mesure de hauteur moyenne, pour que le temps d'amortissement des balancements du contrepoids soit comparable au temps nécessaire pour effectuer la mesure et stabiliser le chariot. La valeur optimale du jeu est donc comprise entre 0.2 et 5 millimètres, de préférence entre 0.5 et 2 millimètres. Des essais concluants ont notamment été effectués en employant un jeu de 1 millimètre.

L'invention sera mieux comprise à la lecture de la description d'un exemple de réalisation préférentiel illustré par les figures annexées qui montrent :

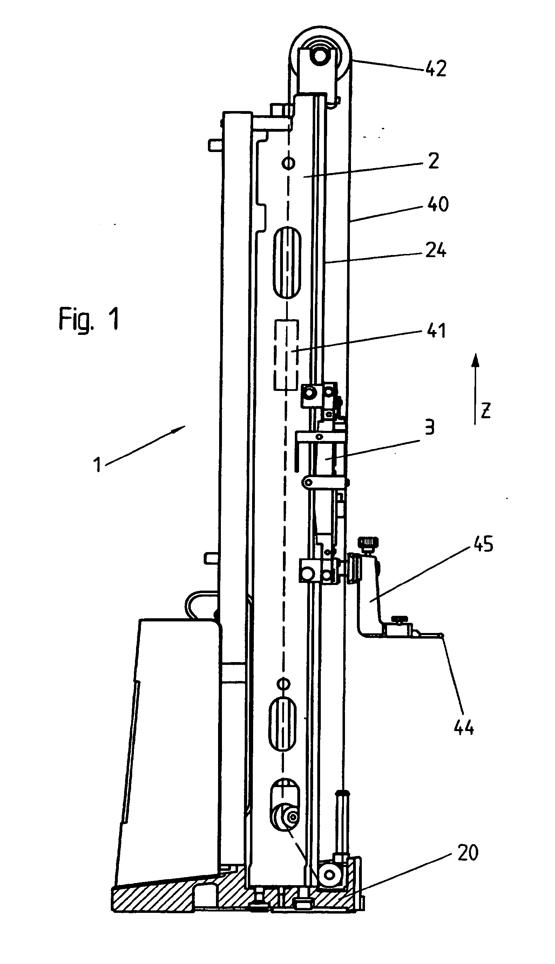

La figure 1 une vue latérale d'une colonne de mesure de dimensions longitudinales selon l'invention.
La figure 2 une vue en perspective d'une portion du tube de guidage de l'invention.
La figure 3 une vue latérale du contrepoids.

Un exemple de colonne de mesure selon l'invention comprend un bâti 2 vertical monté perpendiculairement sur un socle 20. Le bâti est creux et comprend une face avant munie d'une règle non représentée et de rails de guidage 24. La règle est munie d'électrodes capacitives ou magnétiques, par exemple, permettant une mesure de position absolue ou relative au moyen d'un capteur non représenté monté sur le chariot 3. Les rails 24 peuvent être rapportés ou de préférence usinés sur bâti 2 et constituent une surface d'appui plane sur laquelle se déplacent des roulements du chariot 3. D'autres rails sur une face arrière du bâti 2 forment une surface de roulement arrière pour des roulements supplémentaires.

Un mécanisme d'entraînement motorisé lié au bâti comprend une poulie supérieure 42 et une poulie inférieure non représentée. Le mécanisme d'entraînement comprend en outre un moteur permettant d'entraîner en rotation la poulie supérieure 42, ainsi qu'un câble ou une courroie d'entraînement 40 formant une boucle tendue entre les deux poulies. Le chariot 3 est fixé sur le premier brin de la courroie d'entraînement 40 et peut ainsi être entraîné selon l'axe vertical z au moyen du moteur. Le contrepoids 41 fixé sur l'autre brin de la courroie d'entraînement 40 se déplace en sens opposé au chariot 3 à l'intérieur du bâti 2. La force de traction de la courroie 40 est contrôlée avec précision par exemple au moyen d'une friction entre le moteur et la poulie d'entraînement, et/ou en contrôlant le couple d'entraînement du moteur.

Une touche 44 est montée sur le chariot 3 au moyen d'un porte-touche 45. L'extrémité sphérique de la touche 44 est destinée à être mise en contact avec la pièce à mesurer. Un système de mesure de type capacitif, inductif, optoélectronique ou magnétorésistif permet d'indiquer sur un affichage électronique non représenté la position de la touche 44 ou le déplacement effectué par la touche 44 entre deux points de mesure. Le système de mesure comporte par exemple un capteur électronique monté sur le chariot 3 en regard de la règle 22 et relié par une natte de câble souple non représentée, éventuellement par une liaison radio locale, à une console de commande et d'affichage de mesure.

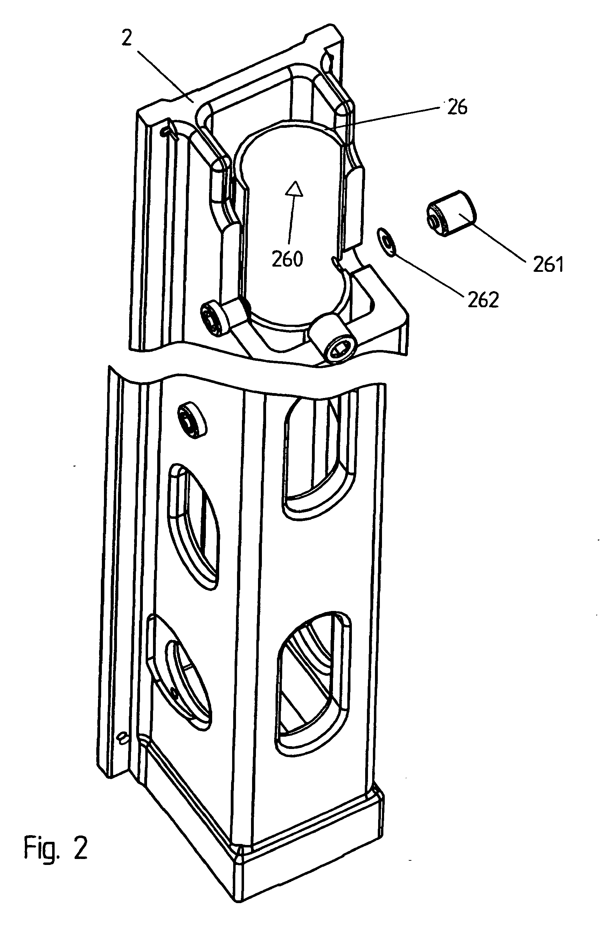

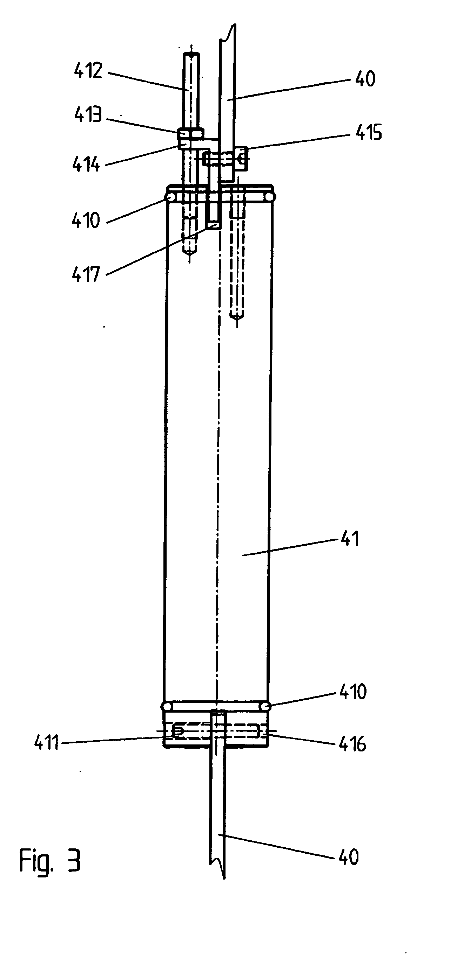

Le contrepoids 41 et les surfaces de guidage du contrepoids sont représentés plus en détail sur les figures 2 et 3. Dans cet exemple, le contrepoids 41 est constitué par un cylindre métallique, par exemple un cylindre d'acier, dont la masse correspond à celle du chariot 3 et des éléments entraînés en déplacement avec le chariot. Le point d'attache du contrepoids 41 sur la courroie est parfaitement centré de manière à garantir la verticalité du contrepoids. Il est souhaitable de limiter la longueur du contrepoids. Cela permet en effet de réduire le risque de collisions lorsque le contrepoids n'est pas parfaitement vertical, et d'autre part d'augmenter la course possible pour une auteur de bâti possible. Dans ce but, le diamètre du contrepoids est de préférence proche du diamètre maximal qui peut être introduit dans le creux du bâti 2.

A l'arrêt, le contrepoids 41 et le chariot 3 sont ainsi pendus de chaque côté de la poulie supérieure 42 ; les masses sont en équilibre en sorte que la courroie d'entraînement 40 n'exerce aucun couple sur cette poulie. Les masses égales du contrepoids et du chariot sont suffisantes pour que la courroie d'entraînement 40 ne glisse pas sur la poulie d'entraînement 42. Des masses importantes provoquent néanmoins des forces et des moments sur le chariot qui pourraient perturber la mesure. Dans le cas d'une courroie en matière plastique composite et d'une surface d'entraînement de la poulie en aluminium éloxé, des essais concluants ont été effectués avec des masses de l'ordre de 950 grammes. D'autres essais concluants ont été effectués avec une courroie en acier.

Le contrepoids 41 est muni de deux joints caoutchouc (o-ring) 410 légèrement en saillie sur sa surface externe. Ces joints agissent comme une surface d'amortissement pour amortir les éventuelles collisions qui peuvent néanmoins se produire entre le contrepoids et la surface de guidage. Les oscillations provoquées par ces collisions sont ainsi plus rapidement amorties et le bruit du choc, amplifié par le tube 26, est assourdi grâce au caoutchouc. On prévoira de préférence plusieurs joints o-rings en haut et en bas du contrepoids41 lorsque la longueur de ce dernier est importante et qu'il pourrait se déplacer de manière légèrement oblique.

La courroie 40 est fixée à l'extrémité inférieure du contrepoids 41 au moyen d'une vis sans tête 411 ou d'une goupille maintenant la courroie dans une fente 416. Un dispositif de réglage de la tension de la courroie 40 est prévu à l'autre extrémité du contrepoids 41. Sur l'exemple illustré, ce dispositif comprend une vis sans tête 412 vissée et de préférence collée dans le contrepoids 41. Une équerre 414 coulisse le long de la tige 412 et dans une fente 417 dans le contrepoids. Grâce à un écrou 413, l'équerre 414 peut être rapprochée du contrepoids 41 de manière à tendre la courroie qui est fixée contre l'équerre au moyen d'une vis 415.

Sur l'exemple représenté, les surfaces de guidage du contrepoids 41 sont constituées par la face interne 260 d'un tube cylindrique 26 monté à l'intérieur du bâti 2. Comme indiqué plus haut, le jeu entre le rayon maximal du contrepoids - au niveau du joint o-ring 410 et la surface interne du tube de guidage est de préférence compris entre 0.2 et 5 millimètres, préférablement entre 0.5 et 2.0 millimètres, par exemple 1 millimètre. La longueur du tube de guidage est égale ou supérieure à la course du contrepoids et dépend donc de la hauteur de la colonne de mesure.

Le tube de guidage 26 est monté dans le bâti 2 au moyen de vis 261. Dans l'exemple illustré, 3 vis 261 sont disposées près du sommet du tube et 3 vis supplémentaires près de sa base. Ces vis sont dotées de rondelles élastiques bombées 262 et permettent d'ajuster la verticalité du tube 26 dans les deux axes, de manière à assurer un déplacement du contrepoids 41 sans collisions tout au long de sa course. Les vis réglées sont de préférence bloquées à l'aide d'un point de colle ou de frein filet. Il serait aussi possible d'utiliser un nombre d'éléments de réglage de la perpendicularité différent, par exemple deux vis au sommet et à la base de la colonne. La verticalité du bâti 2 peut elle-même être ajustée au préalable, par exemple en réglant le parallélisme entre le socle 20 et le plan de travail à l'aide de pieds ajustables (non représentés), ou de préférence en adaptant la perpendicularité entre le socle 20 et le bâti 2 à l'aide de vis de réglage sous l'assise du socle.

Dans l'exemple illustré, la section du contrepoids est ronde et il est guidé par les surfaces internes d'un tube cylindrique 26. Cette disposition a l'avantage d'utiliser des formes extrudées ou tournées peu coûteuses à usiner avec précision. On comprendra néanmoins que d'autres formes de contrepoids, par exemple des contrepoids avec des sections rectangulaires ou ovales, et de surfaces de guidage peuvent être employées, des sections non rondes ayant l'avantage d'empêcher la rotation du contrepoids sur son axe longitudinal. Il est aussi possible de prévoir des surfaces de guidage qui n'entourent pas tout le contrepoids. Par exemple, on pourrait employer une ou plusieurs bandes ou tiges verticales présentant des surfaces de guidage réduites à des lignes, ou même des points de guidage discrets le long de la course du contrepoids, par exemple plusieurs vis dans le bâti. Ces variantes ont toutefois l'inconvénient de nécessiter un réglage et un alignement de chaque point ou surface de guidage, ce qui renchérit le montage. Par ailleurs, un nombre de tiges ou de points importants doit être prévu pour empêcher tout balancement dans toutes les directions possibles le long de la course du contrepoids.

Dans une variante, il serait également possible d'utiliser des surfaces du bâti 2, par exemple les surfaces internes de ce bâti, pour guider le contrepoids. Cette variante a toutefois l'inconvénient de nécessiter un usinage précis et coûteux de cette pièce relativement massive. La précision de la mesure dépendant pour une part importante de la rigidité du bâti, ce dernier est souvent fabriqué en fonte, et donc difficile à usiner avec précision.

Le contrepoids pourrait aussi être muni d'une ou plusieurs ouvertures longitudinales et être guidé par une ou plusieurs tiges verticales liées au bâti et traversant ces ouvertures avec un jeu. L'usinage de ces ouvertures renchérit toutefois la construction. De surcroît, il est difficile de placer des surfaces d'amortissement, par exemple des joints caoutchouc, à l'intérieur des ces ouvertures.

On comprendra enfin qu'il est possible d'utiliser plusieurs contrepoids pendus l'un à côté de l'autre ou l'un sous l'autre, et/ou de relier le chariot avec le ou les contrepoids au moyen de plusieurs câbles ou courroies.

## Revendications

1. Colonne de mesure de dimension longitudinale (1) comprenant:
un bâti (2),
un chariot (3) pouvant se déplacer le long d'un axe de mesure (z) le long du bâti,
un câble ou une courroie (40) pour entraîner ledit chariot en déplacement le long dudit axe de mesure,
un contrepoids lié au dit câble ou à ladite courroie de manière à se déplacer en sens opposé audit chariot,
une surface de guidage permettant de limiter l'ébat dudit contrepoids,
**caractérisé par** un jeu entre ledit contrepoids et ladite surface de guidage est compris entre 0,2 millimètres et 5 millimètres, pour éviter tout contact entre ledit contrepoids et toute surface de guidage lorsque ledit contrepoids est déplacé verticalement et pour limiter les oscillations du contrepoids lors d'une séance de mesure.

2. Colonne de mesure selon la revendication précédente, ledit jeu étant inférieur à 1 millimètre.

3. Colonne de mesure selon l'une des revendications précédentes, ladite surface de guidage étant constituée par au moins une partie de la surface interne d'un tube.

4. Colonne de mesure selon la revendication précédente, ledit tube étant placé à l'intérieur dudit bâti.

5. Colonne de mesure selon l'une des revendications précédentes, ledit contrepoids étant muni de surfaces d'amortissement pour amortir les éventuelles collisions entre ledit contrepoids et ladite surface de guidage.

6. Colonne de mesure selon l'une des revendications précédentes, comportant des éléments de réglage de la verticalité de ladite surface de guidage.

7. Colonne de mesure selon la revendication précédente, comportant au moins une vis pour régler la position du haut de ladite surface de guidage.

8. Colonne de mesure selon la revendication précédente, comportant au moins deux vis pour régler la position du haut de ladite surface de guidage selon deux axes.

9. Colonne de mesure selon l'une des revendications 7 à 8, comportant au moins une vis pour régler la position du bas de ladite surface de guidage.

10. Colonne de mesure selon la revendication précédente, comportant au moins deux vis pour régler la position du bas de ladite surface de guidage selon deux axes.

11. Colonne de mesure selon l'une des revendications 7 à 10, ladite ou lesdites vis étant dotées de rondelles élastiques.

## Claims

1. Column for measuring longitudinal dimensions (1) comprising:
a supporting frame (2),
a carriage (3) capable of moving along a measuring axis (z) along the supporting frame,
a cable or belt (40) for moving said carriage along said measuring axis,
a counterweight connected to said cable or belt so as to move in opposite direction from the carriage,
a guiding surface for restricting the counterweight's movements,
**characterized by** a play between said counterweight and said guiding surface that is comprised between 0,2 millimetres and 0,5 millimetres, to avoid any contact between said counterweight and any guiding surface when said counterweight is displaced vertically and to limit the oscillations of the counterweight during a measurement session.

2. Measuring column according to the preceding claim, said play being less than 1 millimetres.

3. Measuring column according to one of the preceding claims, said guiding surface being constituted by at least part of the inner side of a tube.

4. Measuring column according to the preceding claim, said tube being placed inside the supporting frame.

5. Measuring column according to one of the preceding claims, said counterweight being provided with dampening surfaces for absorbing the possible collisions between said counterweight and said guiding surface.

6. Measuring column according to one of the preceding claims, comprising elements for regulating the verticality of said guiding surface.

7. Measuring column according to the preceding claim, comprising at least one screw for regulating the top position of said guiding surface.

8. Measuring column according to the preceding claim, comprising at least two screws for regulating the top position of said guiding surface along two axes.

9. Measuring column according to one of the claims 7 to 8, comprising at least one screw for regulating the bottom position of said guiding surface.

10. Measuring column according to the preceding claim, comprising at least two screws for regulating the bottom position of said guiding surface along two axes.

11. Measuring column according to one of the claims 7 to 10, said screw or screws being provided with elastic washers.

## Patentansprüche

1. Säule (1) zur Messung von longitudinalen Dimensionen, mit:
einem Gestell (2),
einem Wagen (3), der sich entlang einer Messachse (z) entlang des Gestells bewegen kann,
einem Kabel oder einem Riemen (40), um den besagten Wagen entlang der besagten Messachse zu bewegen,
einem mit dem besagten Kabel oder Riemen so verbundenen Gegengewicht, dass es sich in entgegen gesetzter Richtung des Wagens bewegen kann,
einer Führungsfläche, welche die Verschiebung des besagten Gegengewichts einzuschränken vermag,
**dadurch gekennzeichnet, dass** ein Spiel zwischen dem besagten Gegengewicht und der besagten Führungsfläche zwischen 0,2 Millimetern und 5 Millimetern liegt, um jeglichen Kontakt zwischen dem besagten Gegengewicht und jeglicher Führungsfläche zu verhindern, wenn das besagte Gegengewicht senkrecht verschoben wird, und um die Schwingungen des Gegengewichts während einer Messung einzuschränken.

2. Messsäule gemäss dem vorhergehenden Anspruch, wobei das besagte Spiel weniger als 1 Millimeter beträgt.

3. Messsäule gemäss einem der vorhergehenden Ansprüche, wobei die besagte Führungsfläche aus mindestens einem Teil der Innenseite eines Rohrs besteht.

4. Messsäule gemäss dem vorhergehenden Anspruch, wobei das besagte Rohr innerhalb des besagten Gestells angeordnet ist.

5. Messsäule gemäss einem der vorhergehenden Ansprüche, wobei das besagte Gegengewicht mit dämpfenden Flächen versehen ist, um die möglichen Kollisionen zwischen dem Gegengewicht und der besagten Führungsfläche abzudämpfen.

6. Messsäule gemäss einem der vorhergehenden Ansprüche, mit Elementen zur Einstellung der Vertikalität der besagten Führungsfläche.

7. Messsäule gemäss dem vorhergehenden Anspruch, mit mindestens einer Schraube, um die obere Stellung der besagten Führungsfläche einzustellen.

8. Messsäule gemäss dem vorhergehenden Anspruch, mit mindestens zwei Schrauben, um die obere Stellung der besagten Führungsfläche gemäss zwei Achsen einzustellen.

9. Messsäule gemäss einem der Ansprüche 7 bis 8, mit mindestens einer Schraube, um die untere Stellung der besagten Führungsfläche einzustellen.

10. Messsäule gemäss dem vorhergehenden Anspruch, mit mindestens zwei Schrauben, um die untere Stellung der besagten Führungsfläche gemäss zwei Achsen einzustellen.

11. Messsäule gemäss einem der Ansprüche 7 bis 10, wobei die besagte Schraube oder die besagten Schrauben mit elastischen Unterlegscheiben versehen sind.
